# EUROPÄISCHE PATENTSCHRIFT

(11) **EP 1 368 224 B1**
(45) Veröffentlichungstag und Bekanntmachung des Hinweises auf die Patenterteilung: **14.12.2005**
(21) Anmeldenummer: 02719934.8
(22) Anmeldetag: 27.02.2002
(51) Int. Cl.: B62D 61/12, B60G 17/005, E04G 21/04, B66C 23/78, B60S 9/02

(54) **FAHRBARE DICKSTOFFPUMPE MIT STÜTZKONSTRUKTION UND LUFTGEFEDERTER RADACHSE**
MOBILE VISCOUS MATTER PUMP COMPRISING A SUPPORT CONSTRUCTION AND A PNEUMATIC AIR-CUSHIONED WHEEL AXLE
POMPE A LIQUIDES EPAIS MOBILE COMPORTANT UN DISPOSITIF D'APPUI ET UN ESSIEU A SUSPENSION PNEUMATIQUE

(30) Priorität: 12.03.2001 DE 10112084
(43) Veröffentlichungstag der Anmeldung: 10.12.2003
(73) Patentinhaber: PUTZMEISTER AKTIENGESELLSCHAFT, 72631 Aichtal (DE)
(72) Erfinder: PETZOLD, Wolf-Michael, 73773 Aichwald (DE); GÖGGELMANN, Gernot, 73779 Deizisau (DE)
(74) Vertreter: Wolf, Eckhard
(86) Internationale Anmeldenummer: PCT/EP2002/002054
(87) Internationale Veröffentlichungsnummer: WO 2002/072409

(56) Entgegenhaltungen:
- DE-A- 19 503 895
- FR-A- 2 764 848
- GB-A- 1 500 741
- US-A- 5 540 454
- US-A- 5 961 145
- US-A- 6 164 923
- US-B1- 6 293 586
- PATENT ABSTRACTS OF JAPAN vol. 009, no. 252 (M-420), 9. Oktober 1985 (1985-10-09) & JP 60 104443 A (TADANO TEKKOSHO KK), 8. Juni 1985 (1985-06-08)

## Beschreibung

Die Erfindung betrifft eine fahrbare Dickstoffpumpe mit einem einen Fahrzeugmotor aufweisenden Fahrgestell, mit mehreren am Fahrgestell angeordneten Radachsen, von denen mindestens eine vorzugsweise nicht angetriebene Radachse eine aus druckluftbeaufschlagten Luftfederelementen bestehende Luftfederung aufweist, mit einer hydraulisch betätigbaren Stützkonstruktion, die vier zwischen einer Transportstellung und einer Abstützstellung ausfahrbare und mit einem Fußteil auf dem Untergrund abstützbare Stützausleger aufweist, und mit einem hydraulisch betätigbaren Verteilermast, der von einer auf dem Fahrgestell in zusammengeklapptem Zustand aufliegenden Transportstellung in eine Arbeitsstellung ausstellbar und dabei in einem Mastdrehwerk um eine fahrgestellfeste Hochachse verschwenkbar ist, wobei die Antriebshydraulik für die Stützausleger und den Verteilermast mit einem wahlweise unter Abschaltung des Fahrantriebs ansteuerbaren Nebenabtrieb des Fahrzeugmotors kuppelbar ist.

Bei fahrbaren Betonpumpen ist es bekannt, beim Pumpbetrieb den vorhandenen Fahrzeugmotor für den Antrieb der Hydraulikpumpen zu verwenden. Zu diesem Zweck weist das Fahrzeuggetriebe oder ein im Kardanwellenstrang des Fahrzeugs angeordnetes Verteilergetriebe einen Nebenabtrieb für den Pumpbetrieb auf (siehe zum Beispiel US-A-6164923). Weiter mussen fahrbare Dickstoffpumpen an der Baustelle stabil auf dem Untergrund aufgestellt werden. Hierzu dient die hydraulisch betätigbare Stützkonstruktion, die dafür sorgt, daß die Räder vom Boden abgehoben werden. Bei Großpumpen, die zusätzlich eine beispielsweise als Nachlaufachse ausgebildete, nicht angetriebene luftgefederte Radachse aufweisen, müssen in der Arbeitsstellung besondere Vorkehrungen getroffen werden, um die Standsicherheit bei ausgeschwenktem Verteilermast zu gewährleisten.

Ausgehend hiervon liegt der Erfindung die Aufgabe zugrunde, bei fahrbaren Dickstoffpumpen der eingangs angegebenen Art Vorkehrungen zu treffen, die die Standsicherheit an der Baustelle verbessern.

Die erfindungsgemäße Lösung sieht vor, daß bei fahrbaren Dickstoffpumpen, die mit einer Stützkonstruktion auf dem Untergrund abgestützt werden, die luftgefederten Radachsen vom Untergrund abgehoben werden. Für die Luftfederung sind mit Druckluft beaufschlagbare Luftfederelemente oder Luftfederbalge vorgesehen, die beim Abheben vom Untergrund entlüftet werden. Das eigentliche Abheben der luftgefederten Radachsen erfolgt über pneumatische oder hydraulische Hubelemente.

Um eine sichere Abstützung auf der Baustelle zu gewährleisten, wird gemäß der Erfindung vorgeschlagen, daß in einer zu den Luftfederelementen führenden Druckluftleitung ein erstes Umsteuerventil angeordnet ist, das nach Maßgabe des Einschaltzustands des Nebenabtriebs zwischen einem Drucklufteinlaß und einem atmosphärischen Auslaß umsteuerbar ist. Mit dieser Maßnahme wird sichergestellt, daß die Luftfederelemente beim Fahrbetrieb stets mit Druckluft beaufschlagt sind und daß die Entlüftung erst bei der Umschaltung vom Fahrbetrieb auf den Baustellenbetrieb erfolgen kann. Dementsprechend ist das erste Umsteuerventil bei abgeschaltetem Nebenabtrieb auf den Drucklufteinlaß und bei eingeschaltetem Nebenabtrieb auf den atmosphärischen Auslaß geschaltet. Das erste Umsteuerventil ist dabei als einseitig federbelastetes, über den Nebenabtrieb elektromagnetisch vorsteuerbares Wegeventil ausgebildet. Um ein versehentliches Belüften der Luftfederelemente bei ausgefahrenem Verteilermast zu vermeiden, ist in der Druckluftleitung zwischen Umsteuerventil und Luftfederelement zusätzlich ein Absperrventil angeordnet, das nach Maßgabe einer vorgegebenen Mindestabweichung der Drehstellung des Verteilermasts von seiner Transportstellung absperrbar ist. Zweckmäßig weist das Mastdrehwerk hierfür einen beim Verdrehen des Verteilermasts um einen vorgegebenen Mindestwinkel gegenüber seiner Transportstellung ansprechenden Schalter oder Sensor auf, über den das elektromagnetisch vorsteuerbare Absperrventil absperrbar ist.

Um die luftgefederte Radachse für den Baustellenbetrieb vom Untergrund abheben zu können, ist mindestens ein an der Radachse angreifendes Hubelement vorgesehen, das im Einschaltzustand des Nebenabtriebs unter Anheben der Radachse mit Druckluft oder Drucköl beaufschlagbar ist. Zur Erhöhung der Betriebssicherheit ist in einer zu dem Hubelement führenden Druckluft- oder Druckölleitung ein zweites Umsteuerventil angeordnet, das nach Maßgabe des Einschaltzustands des Nebenabtriebs zwischen einem Druckluft- oder Drucköleinlaß und einem atmosphärischen Auslaß umsteuerbar ist. Damit kann das Hubelement nach Maßgabe des Einschaltzustands des Nebenabtriebs be- und entlüftet werden.

Da es im Bereich der Luftfederelemente und Hubelemente zu Störungen kommen kann, ist gemäß einer bevorzugten Ausgestaltung der Erfindung zusätzlich ein mechanisches Riegelelement vorgesehen, das die luftgefederte Radachse oder ein mit dieser starr verbundenes Teil in der vom Untergrund abgehobenen Stellung untergreift. Vorteilhafterweise ist dabei das Riegelelement mit einem in Sperrrichtung federbelasteten und in Öffnungsrichtung mit Druckluft beaufschlagbaren pneumatischen Betätigungsglied verbunden, wobei in einer zum Betätigungsglied führenden Druckluftleitung ein drittes Umsteuerventil angeordnet ist, das nach Maßgabe des Einschaltzustands des Nebenabtriebs zwischen einem Drucklufteinlaß und einem atmosphärischen Auslaß umsteuerbar ist. Bei eingeschaltetem Nebenabtrieb ist das dritte Umsteuerventil zweckmäßig auf atmosphärischen Auslaß geschaltet, so daß es allein unter der Einwirkung der Feder in der Sperrstellung gehalten wird. Weiter weist das Mastdrehwerk einen beim Verdrehen des Betonverteilermasts um einen vorgegebenen Mindestwinkel gegenüber seiner Transportstellung ansprechenden Schalter oder Sensor auf, über den das dritte Umsteuerventil auch bei abgeschaltetem Nebenabtrieb auf den atmosphärischen Auslaß umsteuerbar ist. Damit wird sichergestellt, daß bei einer nur zeitweiligen Abschaltung des Nebenabtriebs und ausgefahrenem Verteilermast die luftgefederte Radachse vom Untergrund abgehoben bleibt.

Eine weitere vorteilhafte Ausgestaltung der Erfindung sieht vor, daß das Riegelelement einen auf den Verriegelungszustand mit der angehobenen luftgefederten Radachse ansprechenden Sensor aufweist, über den ein in der Druckölleitung der Antriebshydraulik angeordnetes Speiseventil ansteuerbar ist. Dadurch wird sichergestellt, daß die Antriebshydraulik für die Stützkonstruktion und den Verteilermast nur dann funktioniert, wenn die luftgefederte Radachse vom Untergrund abgehoben ist. Der Sensor ist dabei zweckmäßig als Magnetschalter ausgebildet, der bei angehobener Radachse auf einen mit dieser starr verbundenen Permanentmagneten anspricht.

Das Riegelelement ist vorteilhafterweise als Schwenkhaken ausgebildet, der eine schräge Rastkante für die unter der Einwirkung des Hubelements abhebende Radachse aufweist.

Im folgenden wird die Erfindung anhand eines in der Zeichnung in schematischer Weise dargestellten Ausführungsbeispiels näher erläutert. Es zeigen
- Fig. 1: eine Seitenansicht einer Autobetonpumpe mit luftgefederter Nachlaufachse;
- Fig. 2: eine Rückseitenansicht der luftgefederten Radachse mit Verriegelungsmechanismus;
- Fig. 3: eine vergrößerte Darstellung des Verriegelungsmechanismus nach Fig. 2;
- Fig. 4: eine Draufsicht auf die Autobetonpumpe mit Stützkonstruktion und Verteilermast in Transportstellung und zwei ausgeschwenkten Stellungen;
- Fig. 5a: und b eine Seitenansicht und eine Draufsicht des Riegelmechanismus nach Fig. 3 mit Sicherheitssensor in teilweise geschnittener Darstellung;
- Fig. 6: eine Sicherheitsschaltung für eine luftgefederte Nachlaufachse mit Fanghaken.

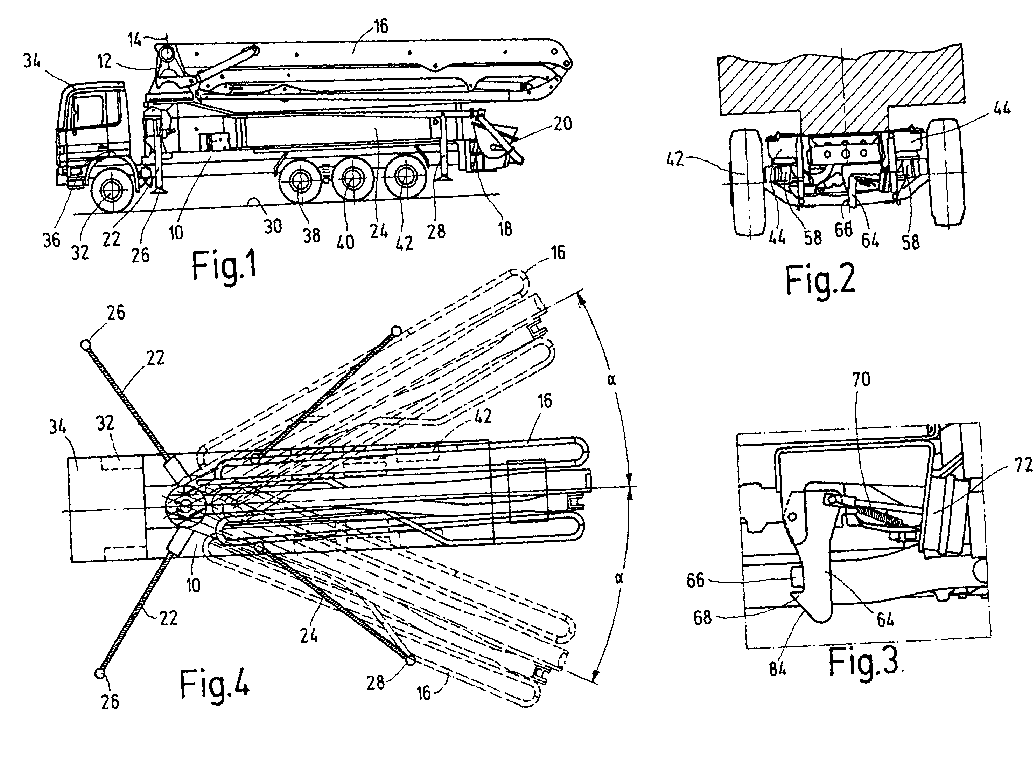

Die in Fig. 1 in Fahrstellung und in Fig. 4 in Abstützstellung dargestellte fahrbare Betonpumpe besteht im wesentlichen aus einem vierachsigen Fahrgestell 10, einem an einem vorderachsnahen Drehwerk 12 um eine fahrgestellfeste Hochachse 14 drehbar gelagerten Verteilermast 16, einer Dickstoffpumpe 18 mit Materialaufgabebehälter 20 und einer aus zwei vorderen und zwei rückwärtigen Stützauslegern 22,24 bestehenden Stützkonstruktion. Die Stützausleger 22,24 sind mit je einem nach unten ausfahrbaren Fußteil 26,28 unter Anheben des Fahrgestells 10 auf dem Untergrund 30 abstützbar. Die vordere Radachse 32 befindet sich am Führerhaus 34, das auch den Fahrzeugmotor 36 enthält. Im rückwärtigen Bereich des Fahrgestells 10 befinden sich zwei angetriebene Radachsen 38,40 sowie eine nicht angetriebene luftgefederte Nachlaufachse 42. Die Nachlaufachse 42 ist zur Erzielung eines kleineren Wendekreises lenkbar, zweckmäßig reibungsgelenkt oder zwangsgelenkt. Zur federnden Abstützung der Nachlaufachse 42 am Fahrgestell sind als Luftfederbalge ausgebildete Luftfederelemente 44 vorgesehen, die über eine Druckluftquelle 46 und eine Druckluftleitung 48 mit Druckluft beaufschlagbar sind.

Im abgestützten Zustand gemäß Fig. 4 wird die Nachlaufachse 42 vom Untergrund 30 abgehoben. Sie dient dabei als Ballast und trägt zur Verbesserung der Standsicherheit bei. Zum Anheben der Nachlaufachse 42 müssen einmal die Luftfederelemente 44 entlüftet werden. Hierzu dient ein erstes Umsteuerventil 50, das wahlweise zwischen einem mit der Druckluftquelle 46 verbundenen Drucklufteinlaß 52 und einem atmosphärischen Auslaß 54 verbindbar ist. Weiter ist zum Anheben der Nachlaufachse 42 ein aus zwei Liftbalgen 58 bestehendes Hubelement vorgesehen, das über ein zweites Umsteuerventil 60 wahlweise mit einem Druckluftanschluß 62 und einem atmosphärischen Auslaß 64 verbindbar ist. Um sicherzustellen, daß die angehobene Nachlaufachse 42 in der Arbeitsstellung auch bei Störungen im Pneumatiksystem nicht auf den Untergrund 30 absinken kann, ist zusätzlich ein als Fanghaken ausgebildetes Riegelelement 64 vorgesehen, das einen Ausleger 66 der Nachlaufachse 42 in der angehobenen Stellung mit seinem Hakenteil 68 untergreift. Das Riegelelement 64 ist mit einem in Sperrrichtung mit einer Zugfeder 70 vorgespannten und in Öffnungsrichtung mit Druckluft beaufschlagbaren Betätigungsglied 72 verbunden. In der zum Betätigungsglied 72 führenden Druckluftleitung 74 ist ein drittes Umsteuerventil 76 angeordnet, das wahlweise zwischen einem Drucklufteinlaß 78 und einem atmosphärischen Auslaß 80 umsteuerbar ist.

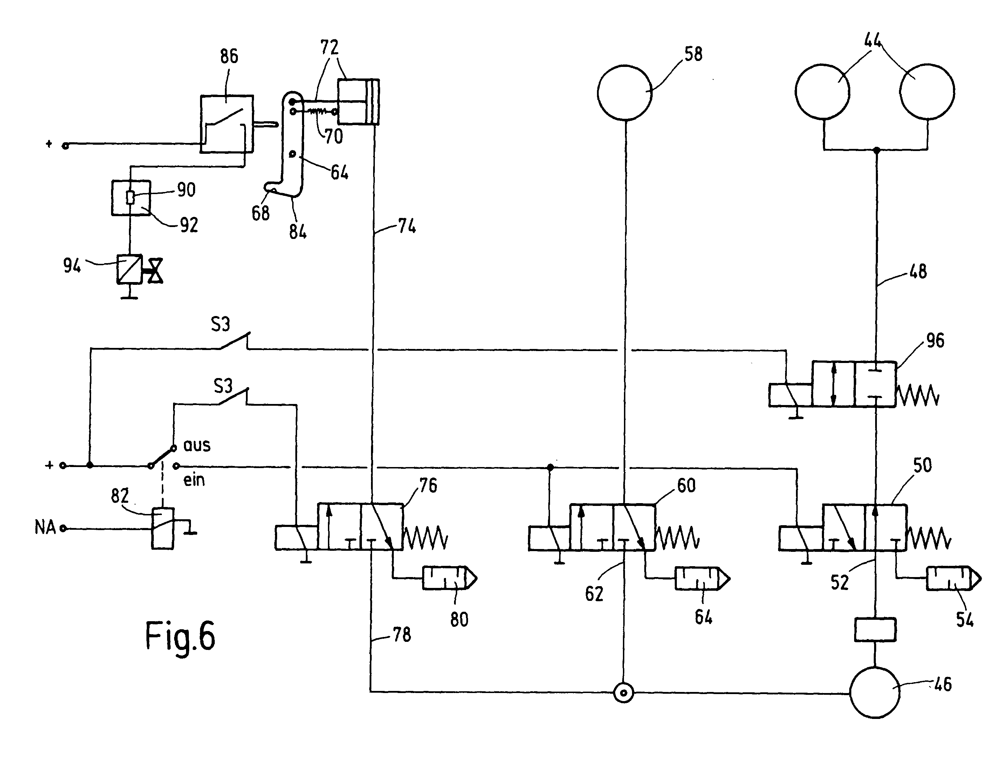

Die Umsteuerventile 50,60,76 sind elektromagnetisch vorgesteuerte federbelastete Wegeventile, die gemeinsam über ein beim Einschalten des Nebenabtriebs NA des Fahrzeugmotors ansteuerbares Relais 82 ansteuerbar sind. Der Nebenabtrieb NA des Fahrzeugmotors wird vom Pumpenfahrer eingeschaltet, wenn vom Fahrbetrieb auf den Pumpbetrieb umgeschaltet wird. Über den Nebenabtrieb werden die Hydraulikpumpen der Antriebshydraulik für die Stützausleger 22,24 und den Verteilermast 16 verwendet. Die Nachlaufachse 42 darf nur angehoben werden, wenn das Motorgetriebe oder ein im Kardanstrang befindliches Verteilergetriebe auf den Nebenabtrieb NA geschaltet ist und ein Fahrbetrieb damit ausgeschlossen ist. Aus Fig. 6 ist zu ersehen, daß bei eingeschaltetem Nebenabtrieb die Luftfederelemente 44 über den atmosphärischen Auslaß 54 entlüftet und das Hubelement 58 über den Drucklufteinlaß 62 belüftet wird. Dadurch wird die Nachlaufachse 42 vom Untergrund 30 abgehoben. Das Riegelelement 64 befindet sich bei eingeschaltetem Nebenabtrieb mit seinem Hakenteil 68 in der allein durch die Feder 70 unterstützten Fangstellung, da das pneumatische Betätigungsglied 72 über das dritte Umsteuerventil 76 mit dem atmosphärischen Auslaß 80 verbunden ist. Der Ausleger 66 gelangt daher beim Anheben der Nachlaufachse 42 gegen die Schrägfläche 84 des Riegelelements 64 und verschwenkt dieses entgegen der Kraft der Zugfeder 70, bis das Riegelelement 64 in seine Fangstellung zurückschwenken kann (Fig. 3).

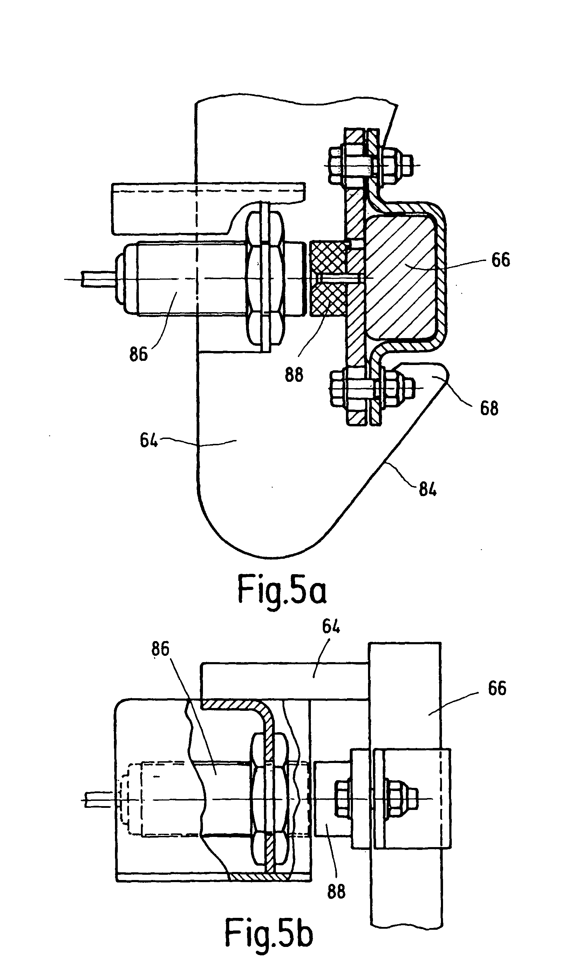

Wie aus Fig. 5a und b zu ersehen ist, befindet sich am Riegelelement 64 zusätzlich ein als Magnetschalter ausgebildeter Sicherheitssensor 86, der über einen am Ausleger 66 befestigten Permanentmagneten 88 auslösbar ist. Der Sicherheitssensor 86 ist Bestandteil eines Schaltkreises 90 im zentralen Schaltschrank 92 der Autobetonpumpe, über den u.a. ein Speiseventil 94 angesteuert wird, das die Druckölzufuhr zur Antriebshydraulik für die Stützausleger und den Verteilermast steuert. Damit kann sichergestellt werden, daß die Antriebshydraulik nur dann mit Drucköl beaufschlagt wird, wenn die Nachlaufachse 42 vom Untergrund 30 abgehoben und damit ein sicherer Stand der Betonpumpe gewährleistet ist.

Da der Nebenabtrieb NA des Fahrzeugmotors auch bei ausgefahrenem Betonverteilermast vom Pumpenfahrer zeitweilig ausgeschaltet werden kann, ist in der Schaltung nach Fig. 6 zusätzlich ein Sicherheitsschalter S3 vorgesehen, der über das Mastdrehwerk 12 betätigt wird. Dabei ist zu berücksichtigen, daß bei abgeschaltetem Nebenabtrieb NA ohne den Schalter S3 nicht sichergestellt werden kann, daß sich die Nachlaufachse 42 nicht auf den Untergrund absenkt. Ist dies der Fall, so kann die Standsicherheit der Autobetonpumpe nur dann gewährleistet werden, wenn der Verteilermast 16 sich innerhalb eines engen Winkelbereichs von ± α von der Transportstellung aus befindet (vgl. Fig. 4), wobei der Winkel α etwa 10° bis 20° beträgt. Die Schalter S3 sind Öffner, die bei kleinen Schwenkwinkeln geschlossen sind und bei Überschreiten eines vorgegebenen Grenzwinkels α öffnen. In der Schaltung nach Fig. 6 führt dies dazu, daß bei ausgeschaltetem Nebenabtrieb NA das Riegelelement 64 nur dann von seiner Verriegelungsstellung zurückverschoben wird und die Luftfederelemente 44 nur dann über das zusätzliche Absperrventil 96 mit Druckluft beaufschlagt werden, wenn sich der Verteilermast 16 in der Nähe seiner Transportstellung befindet. Ist der Verteilermast dagegen um mehr als den Grenzwinkel α ausgeschwenkt, so bleibt das pneumatische Betätigungsglied 72 über das Umsteuerventil 76 entlüftet und das Absperrventil 96 gegen Druckluftdurchtritt gesperrt.

Zusammenfassend ist folgendes festzuhalten: Die Erfindung betrifft eine fahrbare Dickstoffpumpe mit einer hydraulisch betätigbaren Stützkonstruktion, einem Verteilermast 16 und einer luftgefederten Nachlaufachse 42. Um die Standsicherheit beim Pumpbetrieb zu gewährleisten, ist die Nachlaufachse 42 unter Entlüftung der Luftfederung durch ein Hubelement 58 anhebbar, wobei die Entlüftung der Luftfederung 44 und die Betätigung des Hubelements 58 und eines Riegelelements 64 nach Maßgabe des Einschaltzustandes des für die Druckölversorgung der Antriebshydraulik verwendeten Nebenabtriebs NA des Fahrzeugmotors ansteuerbar ist.

Die Erfindung wurde vorstehend für den Fall einer luftgefederten Nachlaufachse erläutert. Sie ist jedoch nicht auf dieses Ausführungsbeispiel beschränkt. Grundsätzlich ist es möglich, die Erfindung auch auf mobile Arbeitsmaschinen anzuwenden, bei denen mehrere oder alle Radachsen luftgefedert und mit den beschriebenen Merkmalen ausgestattet sind.

## Patentansprüche

1. Fahrbare Dickstoffpumpe mit einem einen Fahrzeugmotor (36) aufweisenden Fahrgestell (10), mit mehreren am Fahrgestell (10) angeordneten Radachsen (32,38,40,42), von denen mindestens eine vorzugsweise nicht angetriebene Radachse (42) eine aus druckluftbeaufschlagten Luftfederelementen (44) bestehende Luftfederung aufweist, mit einer hydraulisch betätigbaren Stützkonstruktion, die vier zwischen einer Transportstellung und einer Abstützstellung ausfahrbare und mit einem Fußteil (26,28) auf dem Untergrund (30) abstützbare Stützausleger (22,24) aufweist, und mit einem hydraulisch betätigbaren Verteilermast (16), der von einer auf dem Fahrgestell aufliegenden Transportstellung in eine Arbeitsstellung ausstellbar und an einem Mastdrehwerk (12) um eine fahrzeugfeste Hochachse verschwenkbar ist, wobei die Antriebshydraulik für die Stützausleger (22,24) und den Verteilermast (16) mit einem wahlweise unter Abschaltung des Fahrantriebs ansteuerbaren Nebenabtrieb (NA) des Fahrzeugmotors (36) kuppelbar ist, **dadurch gekennzeichnet, daß** in einer zu den Luftfederelementen (44) führenden Druckluftleitung (48) ein erstes Umsteuerventil (50) angeordnet ist, das nach Maßgabe des Einschaltzustandes des Nebenabtriebs (NA) zwischen einem Drucklufteinlaß (52) und einem atmosphärischen Auslaß (54) umsteuerbar ist.

2. Dickstoffpumpe nach Anspruch 1, **dadurch gekennzeichnet, daß** das erste Umsteuerventil (50) bei abgeschaltetem Nebenabtrieb (NA) auf den Drucklufteinlaß (52) und bei eingeschaltetem Nebenabtrieb (NA) auf den atmosphärischen Auslaß (54) geschaltet ist.

3. Dickstoffpumpe nach Anspruch 1 oder 2, **dadurch gekennzeichnet, daß** das erste Umsteuerventil (50) ein einseitig federgestütztes, über die Schaltstellung des Nebenabtriebs elektromagnetisch vorsteuerbares Wegeventil ist.

4. Dickstoffpumpe nach einem der Ansprüche 1 bis 3, **dadurch gekennzeichnet, daß** in der Druckluftleitung (48) zwischen Umsteuerventil (50) und Luftfederelementen (44) ein Absperrventil (96) angeordnet ist, das nach Maßgabe einer vorgegebenen Mindestabweichung (α) der Drehstellung des Verteilermasts (16) von seiner Transportstellung absperrbar ist.

5. Dickstoffpumpe nach Anspruch 4, **dadurch gekennzeichnet, daß** das Mastdrehwerk (12) einen beim Verdrehen des Verteilermasts (16) um einen vorgegebenen Mindestwinkel (α) gegenüber seiner Transportstellung ansprechenden Schalter (S3) oder Sensor aufweist, über den das elektromagnetisch vorsteuerbare Absperrventil (96) absperrbar ist.

6. Dickstoffpumpe nach einem der Ansprüche 1 bis 5, **dadurch gekennzeichnet, daß** an der luftgefederten Radachse (42) mindestens ein pneumatisches oder hydraulisches Hubelement (58) angreift, das im Einschaltzustand des Nebenabtriebs (NA) unter Anheben der betreffenden Radachse (42) mit Druckluft oder Drucköl beaufschlagbar ist.

7. Dickstoffpumpe nach Anspruch 6, **dadurch gekennzeichnet, daß** in einer zu dem Hubelement (58) führenden Druckluft- oder Druckölleitung ein zweites Umsteuerventil (60) angeordnet ist, das nach Maßgabe des Einschaltzustands des Nebenabtriebs (NA) zwischen einem Druckluft- oder Drucköleinlaß (62) und einem atmosphärischen Auslaß (63) umsteuerbar ist.

8. Dickstoffpumpe nach einem der Ansprüche 1 bis 7, **gekennzeichnet durch** ein mechanisches Riegelelement (64), das die luftgefederte Radachse (42) oder ein mit dieser starr verbundenes Teil (66) in der vom Untergrund (30) abgehobenen Stellung untergreift.

9. Dickstoffpumpe nach Anspruch 8, **dadurch gekennzeichnet, daß** das Riegelelement (64) mit einem in Sperrrichtung federbelasteten und in Öffnungsrichtung mit Druckluft beaufschlagbaren pneumatischen Betätigungsglied (72) verbunden ist, und daß in einer zum Betätigungsglied (72) führenden Druckluftleitung (74) ein drittes Umsteuerventil (76) angeordnet ist, das nach Maßgabe des Einschaltzustands des Nebenabtriebs (NA) zwischen einem Drucklufteinlaß (78) und einem atmosphärischen Auslaß (80) umsteuerbar ist.

10. Dickstoffpumpe nach Anspruch 9, **dadurch gekennzeichnet, daß** das dritte Umsteuerventil (76) bei eingeschaltetem Nebenabtrieb (NA) auf den atmosphärischen Auslaß (80) geschaltet ist.

11. Dickstoffpumpe nach einem der Ansprüche 8 bis 10, **dadurch gekennzeichnet, daß** das dritte Umsteuerventil (76) bei abgeschaltetem Nebenabtrieb (NA) bei in Transportstellung befindlichen Verteilermast (16) auf den Drucklufteinlaß (78) geschaltet ist.

12. Dickstoffpumpe nach einem der Ansprüche 8 bis 11, **dadurch gekennzeichnet, daß** das Mastdrehwerk (12) einen beim Verdrehen des Verteilermasts (16) um einen vorgegebenen Mindestwinkel (α) gegenüber seiner Transportstellung ansprechenden Schalter oder Sensor (S3) aufweist, über den das dritte Umsteuerventil (76) bei abgeschaltetem Nebenabtrieb (NA) auf den atmosphärischen Auslaß (80) umsteuerbar ist.

13. Dickstoffpumpe nach einem der Ansprüche 8 bis 12, **dadurch gekennzeichnet, daß** das Riegelelement (64) einen auf den Verriegelungszustand mit der angehobenen luftgefederten Radachse (42) ansprechenden Sensor (86) aufweist, über den ein in der Druckölleitung der Antriebshydraulik angeordnetes Speiseventil (94) ansteuerbar ist.

14. Dickstoffpumpe nach Anspruch 13, **dadurch gekennzeichnet, daß** der Sensor (86) als Magnetschalter ausgebildet ist, der bei angehobener Radachse (42) auf einen mit dieser starr verbundenen Permanentmagneten (88) anspricht.

15. Dickstoffpumpe nach einem der Ansprüche 8 bis 14, **dadurch gekennzeichnet, daß** das Riegelelement (64) als Schwenkhaken ausgebildet ist, der eine schräge Rastkante (84) für die unter der Einwirkung des Hubelements (58) abhebende Radachse (42) aufweist.

16. Dickstoffpumpe nach einem der Ansprüche 1 bis 15, **dadurch gekennzeichnet, daß** die luftgefederte Radachse als lenkfähige Nachlaufachse (42) ausgebildet ist.

## Claims

1. Mobile concrete pump with a vehicle chassis (10) including a vehicle motor (36), with multiple wheel axles (32, 38, 40, 42) associated with the vehicle chassis (10), of which at least one preferably not driven wheel axle (42) includes a pneumatic spring comprised of compressed air operated air spring elements (44), with a hydraulic operated support assembly including four support struts (22, 24) extendable between a transport position and a support position with respectively one foot part (26, 28) supportable upon the ground (30), and with a hydraulic operated distribution boom (16), which can be deployed from a transport configuration lying on the vehicle chassis to a work position and which is rotateable on a boom rotation mechanism (12) about a vehicle chassis fixed vertical axis, wherein the drive hydraulics for the support struts (22, 24) and the distribution boom (16) can be coupled with an auxiliary drive (NA) of the vehicle motor (36) selectively with switching off of the vehicle drive, thereby **characterized**, that a first reversing valve (50) is provided in a compressed air line (48) leading to the pneumatic spring elements (44), which, depending upon the switched-on condition of the auxiliary drive (NA), is switchable between a compressed air inlet (52) and an atmospheric outlet (54).

2. Thick matter pump according to Claim 1, thereby **characterized**, that the first reversing valve (50) is switched to the compressed air inlet (52) in the case of the switched off auxiliary drive (NA) and switched to the atmospheric outlet (54) in the case of the switched on auxiliary drive (NA).

3. Thick matter pump according to Claim 1 or 2, thereby **characterized**, that the first reversing valve (50) is a one direction spring biased directional valve electro-magnetically pilot controlled by the switch-on condition of the auxiliary drive.

4. Thick matter pump according to one of Claims 1 through 3, thereby **characterized**, that a closing valve (96) is provided in the compressed air line (48) between reversing valve (50) and air spring element (44), which is closeable depending upon the value of the predetermined minimum deflection (α) of the rotational position of the distribution boom (16) from its transport position.

5. Thick matter pump according to Claim 4, thereby **characterized**, that the distribution boom rotation mechanism (12) includes a switch (S3) or sensor responsive during rotation of the distribution boom (16) beyond a predetermined minimum value (α) relative to its transport position, via which the electro-magnetically pilot controlled closing valve (96) is closeable.

6. Thick matter pump according to one of Claims 1 through 5, thereby **characterized**, that at least one pneumatic or hydraulic lift element (58) engages the air sprung wheel axle (42), and is operated with compressed air or hydraulic fluid in the switched-on condition of the auxiliary drive (NA) with lifting of the respective wheel axle (42).

7. Thick matter pump according to Claim 6, thereby **characterized**, that in a compressed air or hydraulic fluid line leading to the lift element (58) a second reversing valve (60) is provided, which depending upon the value of the switch-on condition of the auxiliary drive (NA) is switchable between a compressed air or hydraulic fluid inlet (62) and an atmospheric outlet (63).

8. Thick matter pump according to one of Claims 1 through 7, **characterized by** a mechanical locking element (64), which engages under the pneumatic sprung wheel axle (42) or with a part (66) rigidly connected therewith when the wheel axle (42) is lifted from the ground (30).

9. Thick matter pump according to Claim 8, thereby **characterized**, that the locking element (64) is connected with a pneumatic operating element (72) which is spring biased in the locking direction and is operable by compressed air in the opening direction, and that a third reversing valve (76) is provided in a compressed air line (74) leading to the operating element (72), which, depending upon the switch-on condition of the auxiliary drive (NA), is switchable between a compressed air inlet (78) and an atmospheric outlet (80).

10. Thick matter pump according to Claim 9, thereby **characterized**, that the third reversing valve (76) is switched to the atmospheric outlet (80) in the case of switched-on auxiliary drive (NA).

11. Thick matter pump according to one of Claims 8 through 10, thereby **characterized**, that the third reversing valve (76) is switched to the compressed air inlet (78) in the case of switched-off auxiliary drive (NA) while the distribution boom (16) is located in the transport position.

12. Thick matter pump according to one of Claims 8 through 11, thereby **characterized**, that the distribution boom rotation mechanism (12) includes a switch or sensor (S3) responsive to the rotation of the distribution boom (16) beyond a predetermined minimum threshold angle (α) relative to its transport position, via which the third reversing valve (76) is switchable to the atmospheric outlet (80) in the case of switched off auxiliary drive (NA).

13. Thick matter pump according to one of Claims 8 through 12, thereby **characterized**, that the locking element (64) includes a sensor (86) responsive to the locking configuration of the lifted pneumatic sprung rear axle (42), via which a supply valve (94) located in the hydraulic fluid line of the drive hydraulics is controllable.

14. Thick matter pump according to Claim 13, thereby **characterized**, that the sensor (86) is a magnetic switch, which is responsive to a permanent magnet (88) rigidly connected with the rear axle (42) in the lifted configuration thereof.

15. Thick matter pump according to one of Claims 8 through 14, thereby **characterized**, that the locking element (64) is a pivot hook, which includes a slanted rest or locking edge (84) for the rear axle (42) lifted under the influence of the lift element (58).

16. Thick matter pump according to one of Claims 1 through 15, thereby **characterized**, that the air sprung rear axle is a steerable trailing axle (42).

## Revendications

1. Pompe mobile à matières épaisses, avec un châssis (10) présentant un moteur de véhicule (36), avec plusieurs essieux (32, 38, 40, 42) disposés sur le châssis (10) et parmi lesquels au moins un essieu (42) de préférence non entraîné présente une suspension pneumatique constituée d'éléments (44) de suspension pneumatique alimentés en air comprimé, avec un dispositif d'appui à actionnement hydraulique qui présente quatre béquilles (22, 24) pouvant être déployées entre une position de transport et une position de soutien et pouvant s'appuyer sur le sol (30) par une partie de pied (26, 28), et avec un mât distributeur (16) à actionnement hydraulique qui peut être déployé dans une position de travail à partir d'une position de transport reposant sur le châssis et qui peut être pivoté, sur un dispositif (12) de rotation de mât, autour d'un axe vertical solidaire du véhicule, sachant que le système hydraulique d'entraînement pour les béquilles (22, 24) et pour le mât distributeur (16) peut être couplé à une prise de force (NA) du moteur (36) du véhicule qui peut être asservie sélectivement tout en désactivant l'entraînement du véhicule, **caractérisée en ce qu'**un premier distributeur d'inversion (50) est disposé dans une conduite (48) d'air comprimé menant aux éléments (44) de suspension pneumatique, distributeur qui peut être commuté entre une admission (52) d'air comprimé et une évacuation (54) vers l'atmosphère en fonction de l'état d'activation de la prise de force (NA).

2. Pompe à matières épaisses selon la revendication 1, **caractérisée en ce que** le premier distributeur d'inversion (50) est commuté sur l'admission (52) d'air comprimé lorsque la prise de force (NA) est désactivée et sur l'évacuation (54) vers l'atmosphère lorsque la prise de force (NA) est activée.

3. Pompe à matières épaisses selon la revendication 1 ou 2, **caractérisée en ce que** le premier distributeur d'inversion (50) est un distributeur à plusieurs voies assisté d'un côté par ressort et pouvant être piloté de façon électromagnétique par la position d'activation de la prise de force.

4. Pompe à matières épaisses selon l'une des revendications 1 à 3, **caractérisée en ce qu'**une soupape d'isolement (96) est disposée dans la conduite (48) d'air comprimé entre le distributeur d'inversion (50) et les éléments (44) de suspension pneumatique, soupape qui peut être fermée en fonction d'un écart minimal prédéfini (α) de la position de rotation du mât distributeur (16) par rapport à sa position de transport.

5. Pompe à matières épaisses selon la revendication 4, **caractérisée en ce que** le dispositif (12) de rotation de mât présente un commutateur (S3) ou capteur qui réagit à la rotation du mât distributeur (16) d'un angle minimal prédéfini (α) par rapport à sa position de transport et par l'intermédiaire duquel la soupape d'isolement (96) à pilotage électromagnétique peut être fermée.

6. Pompe à matières épaisses selon l'une des revendications 1 à 5, **caractérisée en ce qu'**au moins un élément de levage (58) pneumatique ou hydraulique agit sur l'essieu (42) à suspension pneumatique, élément qui, dans l'état activé de la prise de force (NA), peut être alimenté en air comprimé ou en liquide hydraulique et soulève alors l'essieu concerné (42).

7. Pompe à matières épaisses selon la revendication 6, **caractérisée en ce qu'**un deuxième distributeur d'inversion (60) est disposé dans une conduite d'air comprimé ou de liquide hydraulique menant à l'élément de levage (58), distributeur qui peut être commuté entre une admission (62) d'air comprimé ou de liquide hydraulique et une évacuation (63) vers l'atmosphère en fonction de l'état d'activation de la prise de force (NA).

8. Pompe à matières épaisses selon l'une des revendications 1 à 7, **caractérisée par** un élément de verrouillage mécanique (64) qui, lorsque l'essieu est soulevé du sol (30), s'engage sous l'essieu (42) à suspension pneumatique ou sous un élément (66) rigidement relié à ce dernier.

9. Pompe à matières épaisses selon la revendication 8, **caractérisée en ce que** l'élément de verrouillage (64) est relié à un organe d'actionnement pneumatique (72) qui est sollicité par ressort dans la direction de blocage et qui peut être sollicité pneumatiquement dans la direction d'ouverture, et **en ce qu'**un troisième distributeur de commutation (76) est disposé dans une conduite (74) d'air comprimé menant à l'organe d'actionnement (72), distributeur qui peut être commuté entre une admission (78) d'air comprimé et une évacuation (80) vers l'atmosphère en fonction de l'état d'activation de la prise de force (NA).

10. Pompe à matières épaisses selon la revendication 9, **caractérisée en ce que** le troisième distributeur d'inversion (76) est commuté sur l'évacuation (80) vers l'atmosphère lorsque la prise de force (NA) est activée.

11. Pompe à matières épaisses selon l'une des revendications 8 à 10, **caractérisée en ce que** le troisième distributeur d'inversion (76) est commuté sur l'admission (78) d'air comprimé lorsque la prise de force (NA) est désactivée et que le mât distributeur (76) se trouve dans la position de transport.

12. Pompe à matières épaisses selon l'une des revendications 8 à 11, **caractérisée en ce que** le dispositif (12) de rotation de mât présente un commutateur ou capteur (S3) qui réagit à la rotation du mât distributeur (16) d'un angle minimal prédéfini (α) par rapport à sa position de transport et par l'intermédiaire duquel le troisième distributeur d'inversion (76) peut être commuté sur l'évacuation (80) vers l'atmosphère lorsque la prise de force (NA) est désactivée.

13. Pompe à matières épaisses selon l'une des revendications 8 à 12, **caractérisée en ce que** l'élément de verrouillage (64) présente un capteur (86) qui réagit à l'état verrouillé avec l'essieu (42) à suspension pneumatique soulevé et qui permet d'asservir une soupape (94) d'alimentation disposée dans la conduite de liquide hydraulique du système hydraulique d'entraînement.

14. Pompe à matières épaisses selon la revendication 13, **caractérisée en ce que** le capteur (86) est réalisé sous forme de commutateur magnétique qui, lorsque l'essieu (42) est soulevé, réagit à un aimant permanent (88) rigidement relié à ce dernier.

15. Pompe à matières épaisses selon l'une des revendications 8 à 14, **caractérisée en ce que** l'élément de verrouillage (64) est réalisé sous forme de crochet pivotant qui présente une arête de crantage oblique (84) pour l'essieu (42) soulevé sous l'action de l'élément de levage (58).

16. Pompe à matières épaisses selon l'une des revendications 1 à 15, **caractérisée en ce que** l'essieu à suspension pneumatique est réalisé sous forme d'essieu traîné dirigeable (42).
